# EUROPEAN PATENT APPLICATION

(11) **EP 4 131 508 A1**
(43) Date of publication of application: **08.02.2023**
(21) Application number: 20927603.9
(22) Date of filing: 27.03.2020
(51) Int. Cl.: H01M 4/64, H01M 4/66

(54) **POLE PIECE, CELL AND BATTERY**

(71) Applicant: Ningde Amperex Technology Ltd., Ningde, Fujian 350900 (CN)
(72) Inventor: LI, Baozhang, Ningde, Fujian 350900 (CN); DONG, Hui, Ningde, Fujian 350900 (CN)
(74) Representative: Icosa
(86) International application number: PCT/CN2020/081622
(87) International publication number: WO 2021/189410

(57) **Abstract**

This application provides an electrode plate including a current collector, where the current collector includes a macromolecular polymer layer and a first conductive layer. The first conductive layer is disposed on a surface of the macromolecular polymer layer. A second conductive layer is provided on a surface of the first conductive layer in an edge region in a widthwise direction of the electrode plate. The second conductive layer extends in a lengthwise direction of the electrode plate, and the first conductive layer is disposed between the second conductive layer and the macromolecular polymer layer. This application further provides a cell containing such electrode plate and a battery containing such cell.

## Description

### TECHNICAL FIELD

This application relates to the field of batteries, and in particular, to an electrode plate, a cell containing such electrode plate, and a battery containing such cell.

### BACKGROUND

With lithium-ion batteries being widely applied in fields such as electric tools, electric vehicles, and portable devices, scenarios where lithium-ion batteries are used have become increasingly complex, making safety requirements for lithium-ion batteries more rigorous. It is commonly known that metal foils such as copper foils and aluminum foils are used as current collectors of lithium-ion batteries. Currently, in order to improve use safety of lithium-ion batteries, composite current collectors are usually used to replace conventional metal foils in lithium-ion batteries. When a composite current collector is damaged by an external force, its resistance will increase sharply so as to mechanically eliminate safety problems resulting from short circuit inside the lithium-ion battery. However, because surface resistance of a composite current collector is about 100 times that of a conventional current collector with same thickness, this leads to too much temperature rise in high power density batteries during charging and discharging, which is unable to satisfy requirements of actual application scenarios and causes huge potential safety hazards.

### SUMMARY

In view of this, it is necessary to provide an electrode plate to resolve the problem of high internal resistance of a cell.

The embodiments of this application provide an electrode plate including a current collector. The current collector includes a macromolecular polymer layer and a first conductive layer. The first conductive layer is disposed on a surface of the macromolecular polymer layer. A second conductive layer is provided on a surface of the first conductive layer in an edge region in a widthwise direction of the electrode plate. The second conductive layer extends in a lengthwise direction of the electrode plate, and the first conductive layer is disposed between the second conductive layer and the macromolecular polymer layer.

In some embodiments, an insulation layer is provided on a surface of the second conductive layer, and the second conductive layer is disposed between the first conductive layer and the insulation layer.

In some embodiments, an active material layer is provided on a surface of the first conductive layer, and the active material layer connects with the second conductive layer and the insulation layer.

In some embodiments, in the widthwise direction of the electrode plate, the edge region includes a first edge region and a second edge region opposite the first edge region, and the second conductive layer extends from the first edge region to the second edge region of the electrode plate.

In some embodiments, an active material layer is provided on a surface of the second conductive layer and an insulation layer is provided on a surface of the second conductive layer in the first edge region or the second edge region of the electrode plate.

In some embodiments, the active material layer connects with the insulation layer.

In some embodiments, a gap is present between the active material layer and the insulation layer.

In some embodiments, the second conductive layer includes a conductive agent and a binder, where a proportion of the conductive agent is 1%-80% and a proportion of the binder is 2%-60%.

In some embodiments, surface resistance of the second conductive layer is less than 1 Ω/cm².

In some embodiments, adhesion between the second conductive layer and the current collector is greater than or equal to 10 N/m

In some embodiments, thickness of the second conductive layer is 10µm-100µm, and thickness of the insulation layer is less than 20µm.

An embodiment of this application further provides a cell, including an electrode assembly. The electrode assembly includes any one of the foregoing electrode plates.

An embodiment of this application further provides a battery including the foregoing cells and a housing configured to accommodate the cell.

In summary, in this application, the second conductive layer is disposed on the edge region or the entire surface of the first conductive layer in the widthwise direction of the electrode plate, so that the second conductive layer and the current collector form a parallel structure, thereby effectively reducing resistance of the electrode plate, which in turn decreases heat production and temperature rise of the cell and battery during charging and discharging, improving reliability of the cell and the battery in use. In addition, the second conductive layer being disposed on the edge region or the entire surface of the first conductive layer in the widthwise direction of the electrode plate also allows electrons generated by the active material layer during charging and discharging to move to the second conductive layer through the first conductive layer, which are then transferred rapidly along the lengthwise direction of the electrode plate. This reduces resistance to the transverse transport of electrons, improving transverse electron transport capacity of the electrode plate, and thus effectively reducing internal resistance of the cell and improving safety performance of the battery in use.

### BRIEF DESCRIPTION OF DRAWINGS

FIG. 1 is a schematic cross-sectional view of a battery according to an embodiment of this application.
FIG. 2 is a schematic view of a cross section of the battery in FIG. 1 along a direction from an active material layer to a current collector.
FIG. 3 is a schematic cross-sectional view of the battery in FIG. 2 according to another embodiment.
FIG. 4 is a schematic cross-sectional view of a battery according to another embodiment of this application.
FIG. 5 is a schematic view of a cross section of the battery in FIG. 4 along a direction from an active material layer to a current collector.
FIG. 6 is a schematic cross-sectional view of the battery in FIG. 5 in another embodiment.
FIG. 7 is a schematic cross-sectional view of a battery according to still another embodiment of this application.
FIG. 8 is a schematic cross-sectional view of the battery in FIG. 7 according to another embodiment.
FIG. 9 is a schematic cross-sectional view of a battery according to yet another embodiment of this application.
FIG. 10 is a schematic cross-sectional view of the battery in FIG. 9 according to another embodiment.
FIG. 11 is a schematic structural diagram of a cell according to an embodiment of this application.
FIG. 12 is a schematic structural diagram of a battery according to an embodiment of this application.

**Reference signs of main components:**

| | |
|---|---|
| Electrode plate | 100 |
| Edge region | 1001 |
| First edge region | 1002 |
| Second edge region | 1003 |
| Current collector | 11 |
| Macromolecular polymer layer | 111 |
| First conductive layer | 112 |
| Second conductive layer | 12 |
| Insulation layer | 13 |
| Active substance layer | 14 |
| Tab | 15 |
| Battery | 1 |
| Battery cell | 10 |
| Electrode assembly | 101 |
| Separator | 102 |
| Housing | 20 |

This application will be further described with reference to the accompanying drawings in the following specific embodiments.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

Unless otherwise defined, all technical and scientific terms used herein shall have the same meanings as commonly understood by those skilled in the art to which this application belongs. The terms used herein in the specification of this application are only used to describe specific embodiments and are not intended to limit this application.

The following describes in detail some implementations of this application with reference to the accompanying drawings. Without conflicts, the following embodiments and features in the embodiments may be combined.

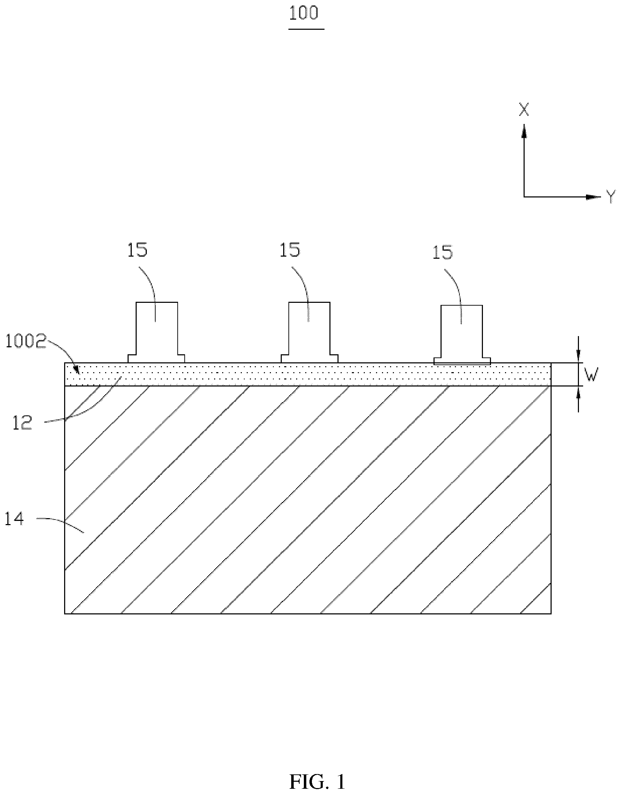

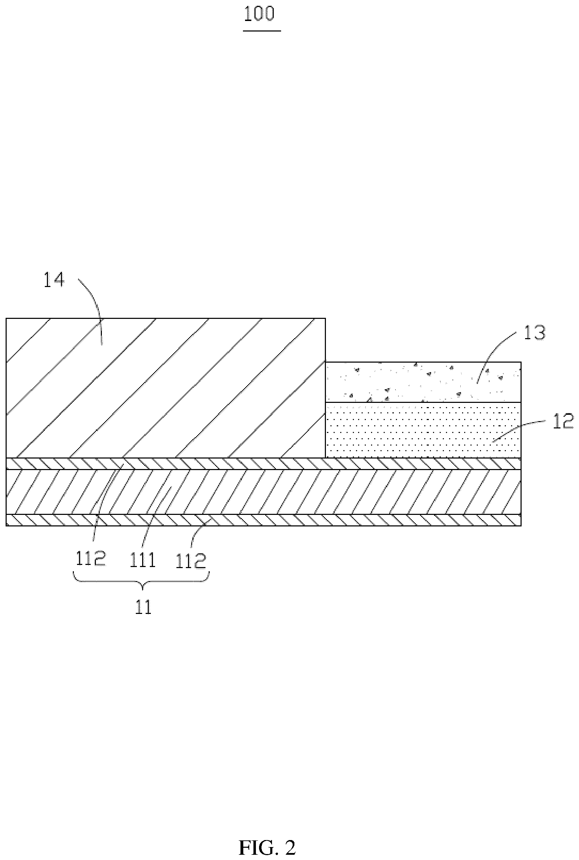

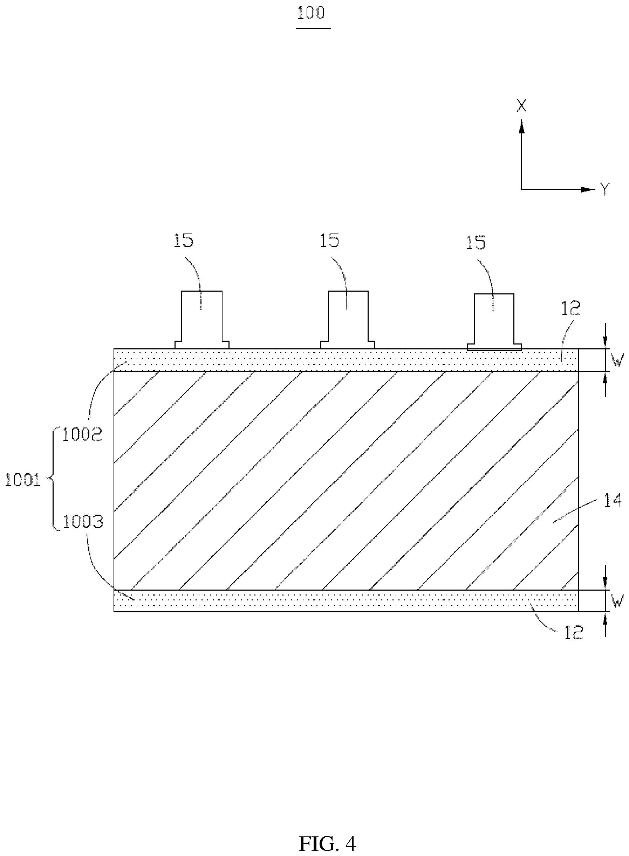

Referring to FIG. 1 and FIG. 2, an embodiment of this application provides an electrode plate 100. The electrode plate 100 includes a current collector 11. The current collector 11 includes a macromolecular polymer layer 111 and a first conductive layer 112 The first conductive layer 112 is disposed on a surface of the macromolecular polymer layer 111. The electrode plate 100 further includes a second conductive layer 12. The second conductive layer 12 is provided on a surface of the first conductive layer 112 in an edge region 1001 in a widthwise direction (that is, an X-axis direction) of the electrode plate 100 (see FIG. 1 and FIG. 4). The second conductive layer 12 extends in a lengthwise direction (that is, a Y-axis direction) of the electrode plate 100, and the first conductive layer 112 is disposed between the second conductive layer 12 and the macromolecular polymer layer 111. In this way, the second conductive layer 12 and the current collector 11 form a parallel structure, thereby effectively reducing resistance of the electrode plate 100.

In this implementation, referring to FIG. 2, the electrode plate 100 further includes an insulation layer 13 provided on a surface of the second conductive layer 12. The second conductive layer 12 is disposed between the first conductive layer 112 and the insulation layer 13.

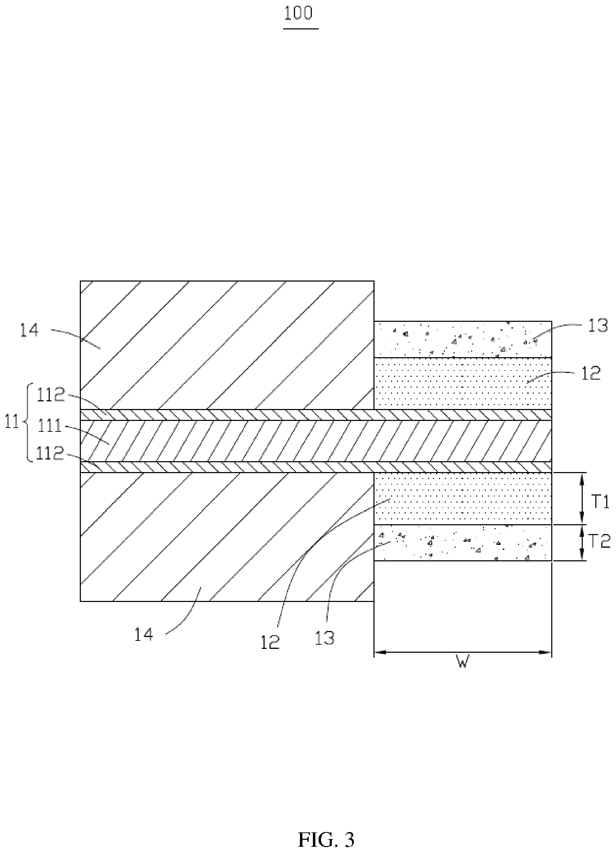

Further, referring to FIG. 2 and FIG. 3, an active material layer 14 is provided on a surface of the first conductive layer 112. The active material layer 14 connects with the second conductive layer 12 and the insulation layer 13. In an implementation, the active material layer 14 only connects with the second conductive layer 12; or a gap is present between the active material layer 14 and the second conductive layer 12 or between the active material layer 14 and the insulation layer 13.

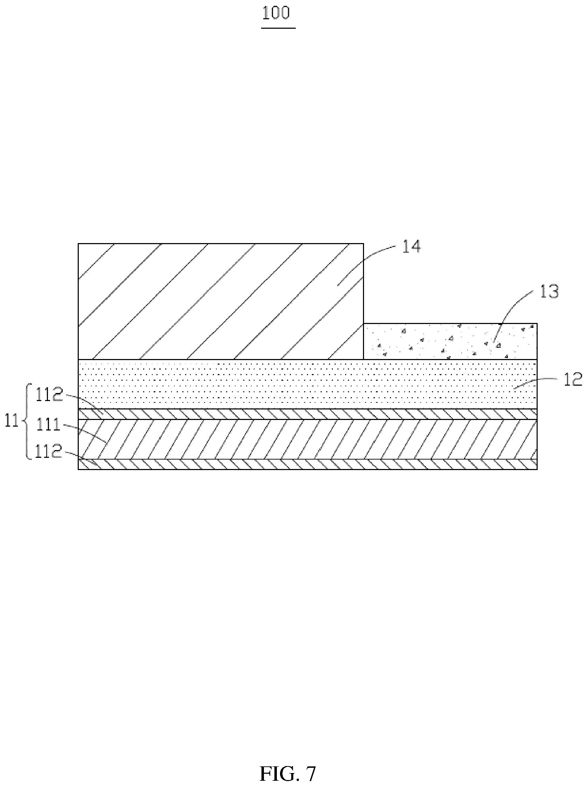

In another implementation, referring to FIG. 4, in the widthwise direction of the electrode plate 100, the edge region 1001 includes a first edge region 1002 and a second edge region 1003 opposite the first edge region 1002. Referring to FIGs. 7 to 10, the second conductive layer 12 extends from the first edge region 1002 to the second edge region 1003 of the electrode plate 100. In this case, the active material layer 14 is provided on a surface of the second conductive layer 12. The insulation layer 13 is provided on a surface of the second conductive layer 12 in the first edge region 1002 or the second edge region 1003 of the electrode plate 100. The active material layer 14 connects with the insulation layer 13. In another implementation, a gap is present between the active material layer 14 and the insulation layer 13.

The second conductive layer 12 includes a conductive agent and a binder. A proportion of the conductive agent is 1%-80% and a proportion of the binder is 2%-60%. In this way, both good adhesion performance between the second conductive layer 12 and the current collector 11 and good conductive performance of the second conductive layer 12 are ensured. The conductive agent includes one or more of carbon black particles, carbon nanotubes, graphite flakes, carbon fibers, acetylene black, metal particles, and metal nanowire. Optionally, the conductive agent includes metal nanowire. The metal nanowire is not limited to copper nanowire, silver nanowire, or the like. The binder may be polyvinylidene fluoride, polyacrylic acid, polyacrylate, polyacrylonitrile, polyurethane, acrylic resin, or modified materials thereof. Optionally, the binder is acrylic resin.

In this implementation, surface resistance of the second conductive layer 12 is less than 1 Ω/cm². In an implementation, surface resistance of the second conductive layer 12 is less than or equal to 0.01 Ω/cm².

In this implementation, adhesion between the second conductive layer 12 and the current collector 11 is greater than or equal to 10 N/m. In an implementation, adhesion between the second conductive layer 12 and the current collector 11 is greater than or equal to 50 N/m.

In this implementation, referring to FIG. 2, thickness T1 of the second conductive layer 12 is 10 µm-100 µm. In an implementation, thickness T1 of the second conductive layer 12 is 20 µm.

In this implementation, referring to FIG. 2, thickness T2 of the insulation layer is less than 20 µm.

Further, referring to FIG. 1 and FIG. 2, the electrode plate 100 may also include a tab 15. The tab 15 connects with the current collector 11. In this implementation, the electrode plate 100 includes three tabs 15. In other implementations, the number of tabs 15 may be adaptively adjusted based on an actual need, which can be one, two, four, or other numbers.

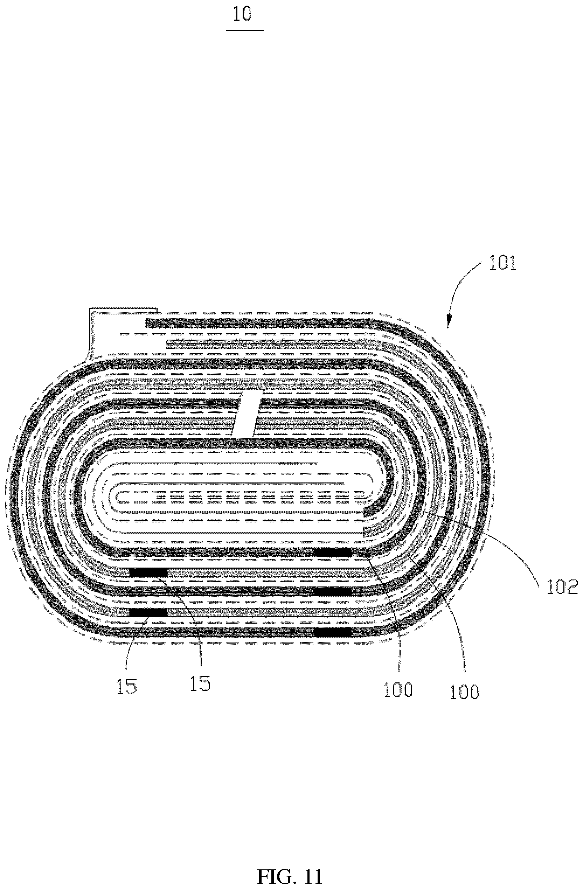

Referring to FIG. 11, an embodiment of this application further provides a cell 10. The cell 10 includes an electrode assembly 101. The electrode assembly 101 includes a positive-electrode plate and a negative-electrode plate. The electrode assembly 101 is formed by winding the positive-electrode plate and the negative-electrode plate. The positive-electrode plate and/or the negative-electrode plate include the foregoing electrode plate 100. In this implementation, the electrode assembly 101 further includes a separator 102. The separator 102 is disposed between the positive electrode plate and the negative electrode plate. In other implementations, the electrode assembly 101 may be formed by laminating the positive-electrode plate and the negative-electrode plate.

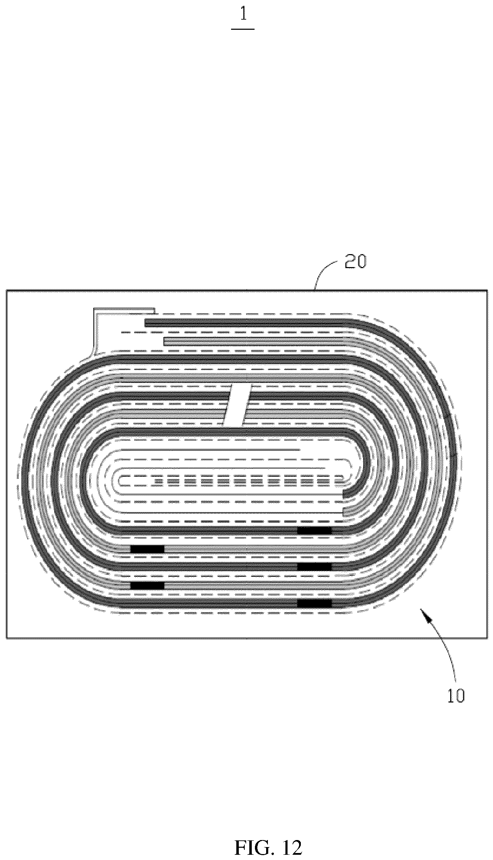

Referring to FIG. 12, an embodiment of this application further provides a battery 1. The battery 1 includes a housing 20 and the foregoing cell 10. The cell 10 is accommodated in the housing 20.

The following describes the electrode plate 100 and the cell 10 in this application in detail by using examples. It can be understood that sizes, materials and/or ratios of the current collector, the active material layer, the second conductive layer, the insulation layer, the separator, and so on in this application are not limited to content recorded in the description of the comparative examples and implementation examples, but may be selected specifically according to actual needs.

### Example 1

Referring to FIG. 3, an electrode plate 100 includes a current collector 11, a second conductive layer 12, an insulation layer 13, and an active material layer 14. In the widthwise direction of the electrode plate 100, the edge region 1001 includes a first edge region 1002 and a second edge region 1003 opposite the first edge region 1002 (see FIG. 4).

In example 1, referring to FIG. 3, the current collector 11 includes a macromolecular polymer layer 111 and first conductive layers 112 disposed on two sides of the macromolecular polymer layer 111. Referring to FIG. 1 and FIG. 3, the second conductive layer 12 is provided on a surface of the first conductive layer 112 in the first edge region 1002, and the second conductive layers 12 are located on two sides of the current collector 11, respectively. The insulation layer 13 is provided on a surface of the second conductive layer 12. The active material layer 14 is provided on a surface of the first conductive layer 112 without the second conductive layer 12.

In other implementations, referring to FIG. 2, the second conductive layer 12, the insulation layer 13, and the active material layer 14 are disposed only on one side of the current collector 11.

In example 1, the foregoing electrode plate 100 was prepared by using the following method.

Provision of current collector 11: The current collector 11 included a macromolecular polymer layer 111 and a first conductive layers 112 disposed on two sides of the macromolecular polymer layer 111.

Preparation of electrode plate 100: Firstly, 10 g of acrylic resin was added into a mixing tank, and then a solvent N-methylpyrrolidone (NMP) was slowly added into the mixing tank so that the acrylic resin gradually dissolved into a glue solution. Then, 70 g of carbon nanotube powder was added into the mixing tank which had been vacuumed for 30 minutes, and a 50 minutes stir was given to form a uniform and stable conductive slurry. Next, an active coating was applied on a surface of the first conductive layer 112 and dried for 30 minutes under 130°C to form an active material layer 14, where the active coating was applied on both sides of the current collector 11, without being applied on the first edge region 1002 on both sides of the current collector 11. Then, the conductive slurry was applied evenly on a surface of the first conductive layer 112 in the first edge region 1002 and dried for 30 minutes under 130°C to obtain a second conductive layer 12 with a thickness T1 of 20 µm and a width W of 2 mm (see FIG. 1 and FIG. 3); Finally, a ceramic coating was applied on a surface of the second conductive layer 12 to form an insulation layer 13 with a thickness T2 of 20 µm (see FIG. 3). The active material layer 14 connects with the second conductive layer 12 and the insulation layer 13.

In example 1, adhesion between the second conductive layer 12 and the current collector 11 was 51 N/m.

Preparation of cell 10: Firstly, two of the foregoing electrode plates 100 were taken respectively as a positive-electrode plate and a negative-electrode plate. Then, a separator 102 was added between the positive-electrode plate and the negative-electrode plate, and the collection of the three was wound to a cell 10 (see FIG. 11).

In example 1, internal resistance of the cell 10 was 11.3 mΩ.

### Example 2

Example 2 differs from example 1 in mass of carbon nanotube powder contained in the conductive slurry. In example 2, the mass of the carbon nanotube powder was 80 g.

In example 2, adhesion between the second conductive layer 12 and the current collector 11 was 32 N/m. Internal resistance of the cell was 11.5 mΩ.

### Example 3

Example 3 differs from example 1 in mass of acrylic resin contained in the conductive slurry. In example 3, the mass of acrylic resin was 3 g.

In example 3, adhesion between the second conductive layer 12 and the current collector 11 was 9 N/m. Internal resistance of the cell was 14.1 mΩ.

### Example 4

Example 4 differs from example 1 in composition of the conductive slurry. In example 4, 70 g of copper nanowire powder was added into the mixing tank which had been vacuumed.

In example 4, adhesion between the second conductive layer 12 and the current collector 11 was 54 N/m. Internal resistance of the cell was 10.5 mΩ.

### Example 5

Example 5 differs from example 1 in composition of the conductive slurry. In example 5, polyvinylidene fluoride was used to replace acrylic resin in example 1.

In example 5, adhesion between the second conductive layer 12 and the current collector 11 was 7 N/m. Internal resistance of the cell was 15.5 mΩ.

### Example 6

Example 6 differs from example 1 in thickness of the second conductive layer 12. In example 6, thickness of the second conductive layer 12 T1 was 10 µm.

In example 6, adhesion between the second conductive layer 12 and the current collector 11 was 43 N/m. Internal resistance of the cell was 13.8 mΩ.

### Example 7

Example 7 differs from example 1 in width of the second conductive layer 12. In example 7, width of the second conductive layer 12 W was 1 mm.

In example 7, adhesion between the second conductive layer 12 and the current collector 11 was 45 N/m. Internal resistance of the cell 10 was 15.1 mΩ.

### Example 8

Example 8 differs from example 1 in locations of the second conductive layer 12, the active material layer 14, and the insulation layer 13.

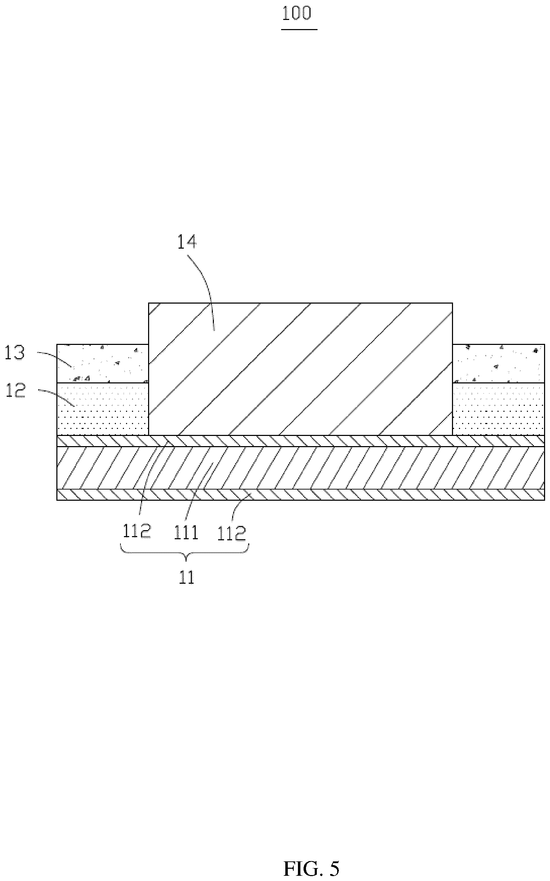

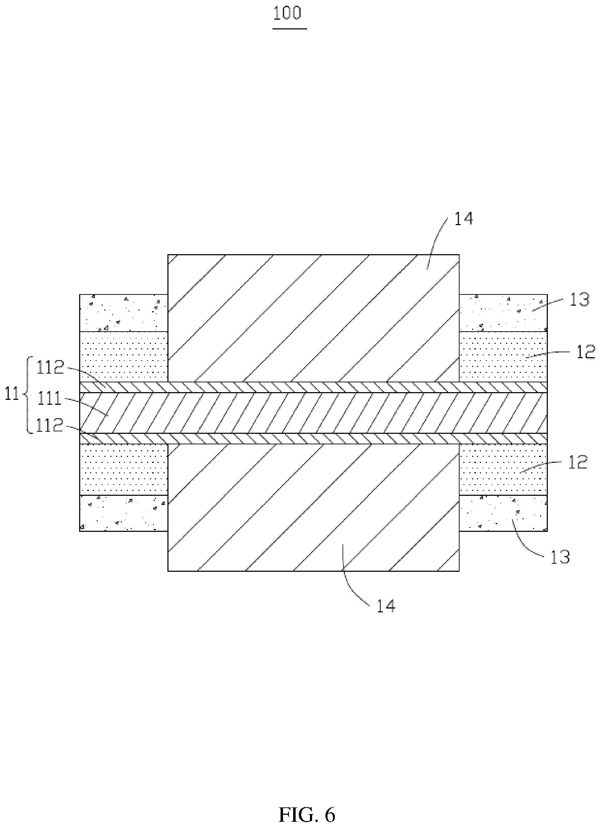

Referring to FIG. 4 and FIG. 6, the second conductive layer 12 was provided on a surface of the first conductive layer 112 in the edge region 1002 and the edge region 1003. The active material layer 14 was provided on a surface of the first conductive layer 112 without the second conductive layer 12. The insulation layer 13 was provided on a surface of the second conductive layer 12. The second conductive layers 12 were disposed on two sides of the current collector 11. In other implementations, referring to FIG. 5, the second conductive layer 12, the insulation layer 13, and the active material layer 14 were disposed only on one side of the current collector 11.

In example 8, adhesion between the second conductive layer 12 and the current collector 11 was 54 N/m. Internal resistance of the cell 10 was 10.5 mΩ.

### Example 9

Example 9 differs from example 1 in locations of the second conductive layer 12, the active material layer 14, and the insulation layer 13.

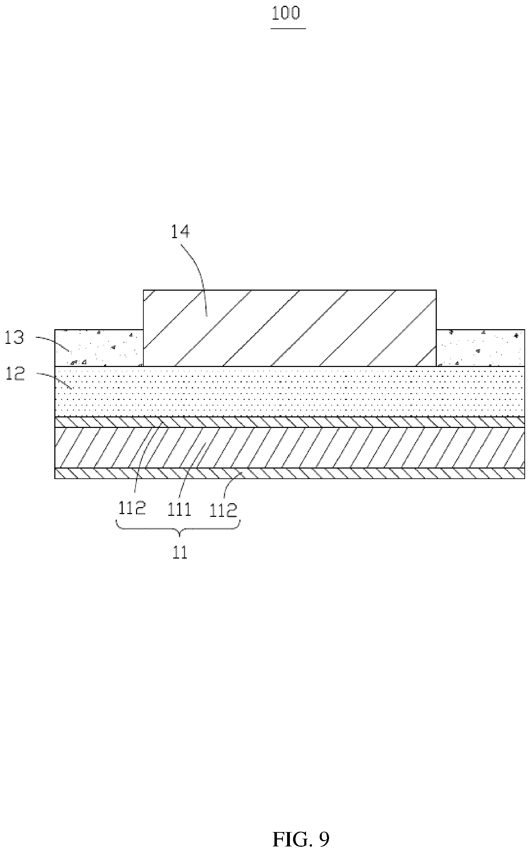

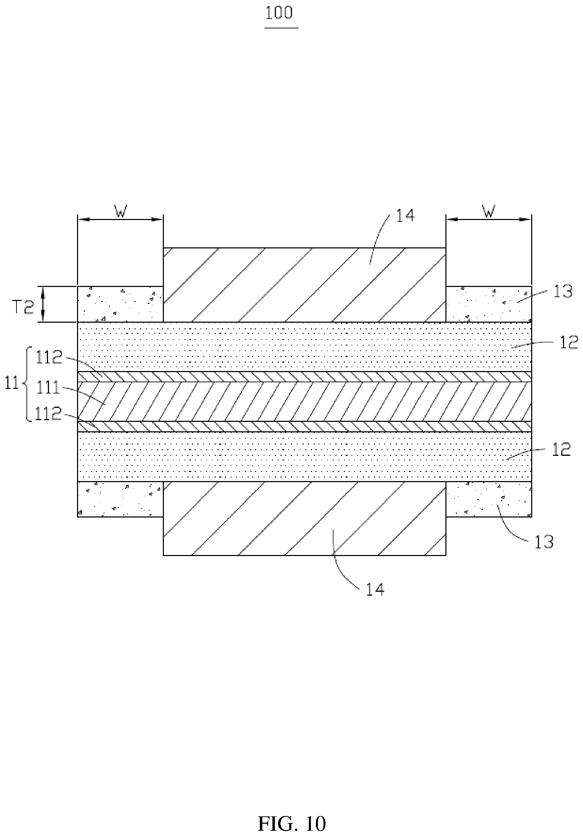

In example 9, referring to FIG. 10, the second conductive layer 12 covered an entire surface of the first conductive layer 112. The insulation layer 13 was provided on a surface of the second conductive layer 12 in an edge region 1002 and on a surface of the second conductive layer 12 in an edge region 1003. The active material layer 14 was provided on a surface of the second conductive layer 12 without the insulation layer 13. The second conductive layers 12 were disposed on two sides of the current collector 11, respectively. In an implementation, referring to FIG. 9, the second conductive layer 12, the insulation layer 13, and the active material layer 14 were disposed only on one side of the current collector 11.

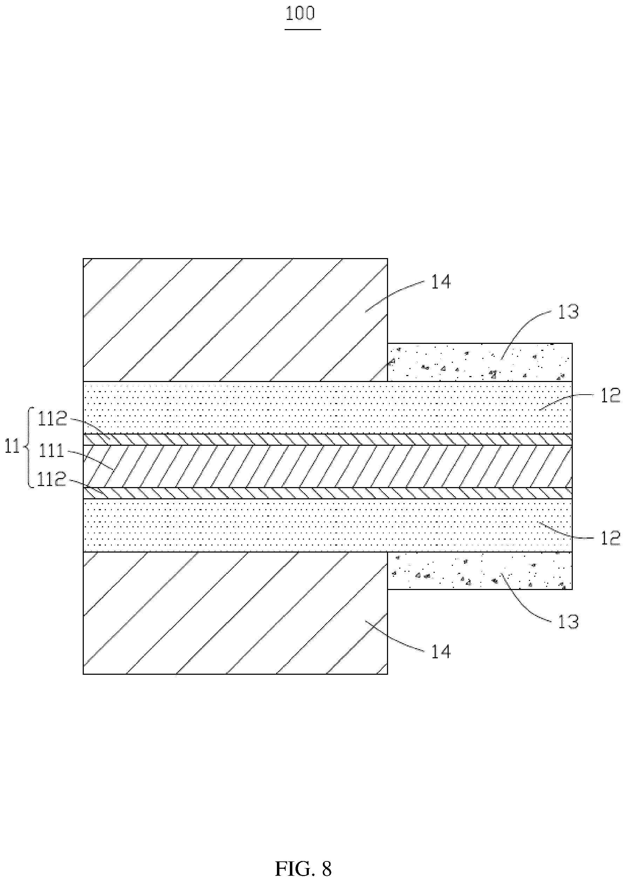

In another implementation, referring to FIG. 8, the second conductive layer 12 covered an entire surface of the first conductive layer 112. The insulation layer 13 was provided on a surface of the first conductive layer 12 in an edge region 1002 or in an edge region 1003. The active material layer 14 was provided on a surface of the second conductive layer 12 without the insulation layer 13. The second conductive layers 12 were disposed on two sides of the current collector 11, respectively. In one other implementation, referring to FIG. 7, the second conductive layer 12, the insulation layer 13, and the active material layer 14 were disposed only on one side of the current collector 11.

In example 9, preparation of the electrode plate 100 was as follows: Firstly, 10 g of acrylic resin was added into a mixing tank, and then a solvent N-methylpyrrolidone (NMP) was slowly added into the mixing tank so that the acrylic resin gradually dissolved into a glue solution. Then, 70 g of carbon nanotube powder was added into the mixing tank which had been vacuumed for 30 minutes, and a 50 minutes stir was given to form a uniform and stable conductive slurry. Next, the conductive slurry was applied evenly on a surface of the first conductive layer 112 and dried for 30 minutes under 130°C to form a second conductive layer 12, where the conductive slurry was applied on both sides of the current collector 11, full of a surface of the first conductive layer 112. Then, an active coating was applied evenly on a surface of the second conductive layer 12 and dried for 30 minutes under 130°C to form an active material layer 14, where the active coating was applied on both sides of the current collector 11 and applying the active coating on a surface of the second conductive layer 12 in a first edge region 1002 and a second edge region 1003 were avoided. Finally, a ceramic coating was applied on a surface of the second conductive layer 12 in a first edge region 1002 and a second edge region 1003 to form an insulation layer 13 with a thickness T2 of 20 µm and a width W of 2 mm (see FIG. 10). The active material layer 14 connected with the insulation layer 13.

In example 9, adhesion between the second conductive layer 12 and the current collector 11 was 54 N/m. Internal resistance of the cell was 10.1 mΩ.

### Comparative example 1

Comparative example 1 differs from example 1 in that the electrode plate 100 in comparative example 1 did not have the second conductive layer 12 or the insulation layer 13.

In comparative example 1, internal resistance of the cell was 18.2 mΩ.

### Comparative example 2

Comparative example 2 differs from example 1 in that no carbon nanotube powder was contained in the conductive slurry.

In comparative example 2, adhesion between the second conductive layer 12 and the current collector 11 was 80 N/m. Internal resistance of the cell was 18.3 mΩ.

### Comparative example 3

Comparative example 3 differs from example 1 in that mass of carbon nanotube powder contained in the conductive slurry was 1 g.

In comparative example 3, adhesion between the second conductive layer 12 and the current collector 11 was 74 N/m. Internal resistance of the cell was 17.2 mΩ.

Experimental parameters and test results of examples 1 to 9 and comparative examples 1 to 3 are given in Table 1.

**Table 1**

| Group | Binder | | Conductive agent | | Second conductive layer | | | Adhesion between second conductive layer and current collector | Internal resistance of cell |
|---|---|---|---|---|---|---|---|---|---|
| | Type | Mass | Type | Mass | Thickness | Width | Location | | |
| Example 1 | Acrylic resin | 10 g | Carbon nanotube | 70 g | 20 µm | 2 mm | First edge region | 51 N/m | 11.3 mΩ |
| Example 2 | Acrylic resin | 10 g | Carbon nanotube s | 80 g | 20 µm | 2 mm | First edge region | 32 N/m | 11.5 mΩ |
| Example 3 | Acrylic resin | 3g | Carbon nanotube s | 70 g | 20 µm | 2 mm | First edge region | 9 N/m | 14.1 mΩ |
| Example 4 | Acrylic resin | 10 g | Copper nanowire | 70 g | 20 µm | 2 mm | First edge region | 54 N/m | 10.5 mΩ |
| Example 5 | Polyvinylidene fluoride | 10 g | Carbon nanotube | 70 g | 20 µm | 2 mm | First edge region | 7 N/m | 15.5 mΩ |
| Example 6 | Acrylic resin | 10 g | Carbon nanotube | 70 g | 10 µm | 2 mm | First edge region | 43 N/m | 13.8 mΩ |
| Example 7 | Acrylic resin | 10 g | Carbon nanotube | 70 g | 20 µm | 1 mm | First edge region | 45 N/m | 15.1 mΩ |
| Example 8 | Acrylic resin | 10 g | Carbon nanotube | 70 g | 20 µm | 2 mm | First edge region and second edge region | 54 N/m | 10.5 mΩ |
| Example 9 | Acrylic resin | 10 g | Carbon nanotube | 70 g | 20 µm | 2 mm | The entire surface of first conductive layer | 54 N/m | 10.1 mΩ |
| Comparative example 1 | / | / | / | / | / | / | / | / | 18.2 mΩ |
| Comparative example 2 | Acrylic resin | 10 g | Carbon nanotube | 0 | 20 µm | 2 mm | First edge region | 80 N/m | 18.3 mΩ |
| Comparative example 3 | Acrylic resin | 10 g | Carbon nanotube | 1 g | 20 µm | 2 mm | First edge region | 74 N/m | 17.2 mΩ |

Table 1 shows that the amount and type of the conductive agent contained in the second conductive layer 12 and thickness, width, and location of the second conductive layer 12 all affected internal resistance of the cell 10. A comparison of examples 1-9 with comparative example 1 shows that the provision of the second conductive layer 12 decreased internal resistance of the cell 10 greatly. In addition, the amount and type of the conductive agent in the second conductive layer 12 and thickness, width, and location of the second conductive layer 12 all affected adhesion between the second conductive layer 12 and the current collector 11.

In summary, in this application, the second conductive layer 12 is disposed on the edge region 1001 or the entire surface of the first conductive layer 112 in the widthwise direction of the electrode plate 100, so that the second conductive layer 12 and the current collector 11 form a parallel structure, thereby effectively reducing resistance of the electrode plate 100, which in turn decreases heat production and temperature rise of the cell 10 and the battery 1 during charging and discharging, improving reliability of the cell 10 and the battery 1 in use. Additionally, the second conductive layer 12 being disposed on the edge region 1001 or the entire surface of the first conductive layer 112 in the widthwise direction of the electrode plate 100 allows electrons generated by the active material layer 14 during charging and discharging to move to the second conductive layer 12 through the first conductive layer 112, which are then transferred rapidly along the lengthwise direction of the electrode plate 100. This reduces resistance to transverse transport of electrons, improving transverse electron transport capacity of the electrode plate 100, and thus effectively reducing resistance of the cell 10 and improving safety performance of the battery 1 in use.

The foregoing embodiments are merely intended to describe the technical solutions of this application, but not to constitute any limitation. Although this application is described in detail with reference to preferred embodiments, persons of ordinary skill in the art should understand that modifications or equivalent replacements can be made to the technical solutions of this application, without departing from the spirit and essence of the technical solutions of this application.

## Claims

1. An electrode plate, comprising a current collector, wherein the current collector comprises a macromolecular polymer layer and a first conductive layer, with the first conductive layer disposed on a surface of the macromolecular polymer layer, **characterized in that** a second conductive layer is provided on a surface of the first conductive layer in an edge region in a widthwise direction of the electrode plate, the second conductive layer extends in a lengthwise direction of the electrode plate, and the first conductive layer is disposed between the second conductive layer and the macromolecular polymer layer.

2. The electrode plate according to claim 1, **characterized in that** an insulation layer is provided on a surface of the second conductive layer, and the second conductive layer is disposed between the first conductive layer and the insulation layer.

3. The electrode plate according to claim 2, **characterized in that** an active material layer is provided on a surface of the first conductive layer, and the active material layer connects with the second conductive layer and the insulation layer.

4. The electrode plate according to claim 1, **characterized in that** in the widthwise direction of the electrode plate, the edge region comprises a first edge region and a second edge region opposite the first edge region, and the second conductive layer extends from the first edge region of the electrode plate region to the second edge region of the electrode plate.

5. The electrode plate according to claim 4, **characterized in that** an active material layer is provided on a surface of the second conductive layer, and an insulation layer is provided on a surface of the second conductive layer at the first region or the second region of the electrode plate.

6. The electrode plate according to claim 5, **characterized in that** the active material layer connects with the insulation layer.

7. The electrode plate according to any one of claims 1 to 6, **characterized in that** the second conductive layer comprises a conductive agent and a binder, wherein a proportion of the conductive agent is 1%-80% and a proportion of the binder is 2%-60%.

8. The electrode plate according to claim 7, **characterized in that** surface resistance of the second conductive layer is less than 1 Ω/cm².

9. The electrode plate according to claim 7, **characterized in that** adhesion between the second conductive layer and the current collector is greater than or equal to 10 N/m.

10. The electrode plate according to claim 7, **characterized in that** thickness of the second conductive layer is 10µm-100µm, and thickness of the insulation layer is less than 20µm.

11. A cell comprising an electrode assembly, **characterized in that** the electrode assembly comprises the electrode plate according to any one of claims 1 to 10.

12. A battery, comprising a cell and a housing configured to accommodate the cell, **characterized in that** the cell comprises the cell according to claim 11.
